(19) Europäisches Patentamt
European Patent Office
Office européen des brevets

(11) **EP 4 098 720 A1**

(12) **EUROPEAN PATENT APPLICATION**

(43) Date of publication:
**07.12.2022 Bulletin 2022/49**

(21) Application number: **21020289.1**

(22) Date of filing: **01.06.2021**

(51) International Patent Classification (IPC):
**C10G 9/36** (2006.01)   **C10G 9/16** (2006.01)
**C10G 75/00** (2006.01)   **G05D 23/00** (2006.01)
**F27D 19/00** (2006.01)

(52) Cooperative Patent Classification (CPC):
**C10G 9/36; C10G 9/16; C10G 75/00; F27D 19/00**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Linde GmbH**
**82049 Pullach (DE)**

(72) Inventors:
• **Grundwürmer, Matthias**
**Hohenschäftlarn (DE)**

• **Pöllmann, Josef-Andreas**
**München (DE)**
• **Stenzel, Alexander**
**München (DE)**
• **Krekorian, Shant**
**München (DE)**

(74) Representative: **Lu, Jing et al**
**Linde GmbH**
**Intellectual Property EMEA**
**Dr.-Carl-von-Linde-Straße 6-14**
**82049 Pullach (DE)**

(54) **A METHOD OF DETERMINING A CARBURISATION MODEL OF A COIL OF A STEAM CRACKING FURNACE**

(57) The present invention relates to a method of determining a carburisation model of a coil of a steam cracking furnace, wherein a carbon gas is led through the coil during operation of the steam cracking furnace, wherein in a carburised portion of a wall of the coil, especially an inner part of the wall facing the carbon gas, carburisation of a material of the wall occurs, wherein a first relation characterises a depth of the carburised portion in dependence of time and further in dependence of a growth parameter, wherein a second relation characterises the growth parameter in dependence of a temperature and further in dependence of at least one, especially two, material specific constant, wherein the method comprises the steps of: determining (211, 213), especially measuring, reference temperature values at reference positions of a wall of a reference coil during operation of a reference steam cracking furnace comprising the reference coil; determining (214), especially measuring, reference carburised portion values of a depth of a carburised portion at the reference positions of the wall of the reference coil at a reference point in time; determining (221) the at least one material specific constant in dependence of the first relation and the second relation and further in dependence of the reference temperature values and the reference carburised portion values; and determining (222) the carburisation model of the coil in dependence of the determined at least one material specific constant and further in dependence of the first relation and the second relation, the carburisation model characterising the depth of the carburised portion of the coil of the steam cracking furnace at a specific position of the wall of the coil in dependence of time and in dependence of a temperature at the specific position of the wall of the coil.

Fig. 2

**Description**

The present invention relates to a method of determining a carburisation model of a coil of a steam cracking furnace as well as to a computing unit, a computer program and a machine-readable storage medium for performing the method.

Background of the invention

The present invention is based on the steam cracking technology for the production of olefins and other base chemicals, as e.g. described in the article "Ethylene" in Ullmann's Encyclopedia of Industrial Chemistry, online publication 15 April 2009, DOI: 10.1002/14356007.a10_045.pub2.

Presently, the thermal energy required for initiating and maintaining the endothermic cracking reactions in steam cracking is provided by the combustion of fuel gas in a furnace refractory. The process gas initially containing steam and the hydrocarbons to be cracked is passed through so-called cracking coils placed inside the refractory, also called radiant zone or section. On this flow path the process gas is continuously heated, enabling the desired cracking reactions to take place inside the cracking coils, and thus the process gas is continuously enriched in the cracking products. Typical inlet temperatures for the process gas into the cracking coils are between 550 and 750°C, outlet temperatures are typically in the range between 800 and 900°C.

In addition to the radiant zone, fired cracking furnaces comprise a so-called convection zone or section and a so-called quench zone or section. The convection zone is usually positioned above the radiant zone and composed of various tube bundles traversing the flue gas duct from the radiant zone. Its main function is to recover as much energy as possible from the hot flue gas leaving the radiant zone. Indeed, only 35 to 50% of the total firing duty is typically transferred within the radiant zone to the process gas passed through the cracking coils. The convection zone therefore plays a central role in the energy management in steam cracking, as it is responsible for the beneficial usage of approximately 40 to 60% of the heat input into a furnace (i.e. of the firing duty). Indeed, when taking the radiant and convection zone together, modern steam cracking plants make use of 90 to 95% of the overall fired duty (based on the fuel's lower heating value or net calorific value). In the convection section, the flue gas is cooled down to temperature levels between 60 and 140 °C before leaving the convection section and being released to the atmosphere via stack.

The flue gas heat recovered in the convection zone is typically used for process duties such as preheating of boiler feed water and/or hydrocarbon feeds, (partial) vaporization of liquid hydrocarbon feeds (with or without prior process steam injection), and superheating of process steam and high-pressure steam.

The quench zone is positioned downstream of the radiant zone along the main process gas route. It is composed of one or more heat exchanger units, having the main functions of quickly cooling the process gas below a maximum temperature level to stop the cracking reactions, to further cool down the process gas for downstream treatment, and to effectively recover sensible heat from the process gas for further energetic usage. In addition, further cooling or quenching can be effected via injection of liquids, e.g. by oil quench cooling when steam cracking liquid feeds.

The process gas heat recovered in the quench section is typically used for vaporizing high-pressure (HP) or super-high-pressure (SHP) boiler feed water (typical at a pressure range between 30 and 130 bar absolute pressure), and for preheating the same boiler feed water, before it being fed to a steam drum. Saturated high-pressure or super-high-pressure-steam generated accordingly may be superheated in the convection zone (see above) to form superheated high-pressure or super-high-pressure steam (SHP steam), and from there may be distributed to the central steam system of the plant, providing heat and power for heat exchangers and steam turbines or other rotating equipment. The typical degree of steam superheating achieved in furnace convection zones lies between 150 and 250 K above the saturation temperature (dew point margin). Generally, steam cracking furnaces may operate with high-pressure steam (typically at 30 to 60 bar) or with super-high-pressure-steam (typically at 60 to 130 bar).

An important part of the process gas treatment subsequent to quench cooling is compression which is typically performed after further treatment such as the removal of heavy hydrocarbons and process water, in order to condition the process gas for separation. This compression, also called raw gas compression, is typically performed with multistage compressors driven by steam turbines. In the steam turbines, steam at a suitable pressure from the central steam system of the plant mentioned, and thus comprising steam produced using heat from the convection section and from quench cooling, can be used. Typically, in a steam cracking plant of the prior art, heat of the flue gas (in the convection zone) and heat of the process gas (in the quench zone) is well balanced with the heat demand for producing a large part of the steam amounts needed for heating and driving steam turbines. In other words, waste heat may be more or less fully utilized for generating steam which is needed in the plant. Additional heat for steam generation may be provided in a (fired) steam boiler.

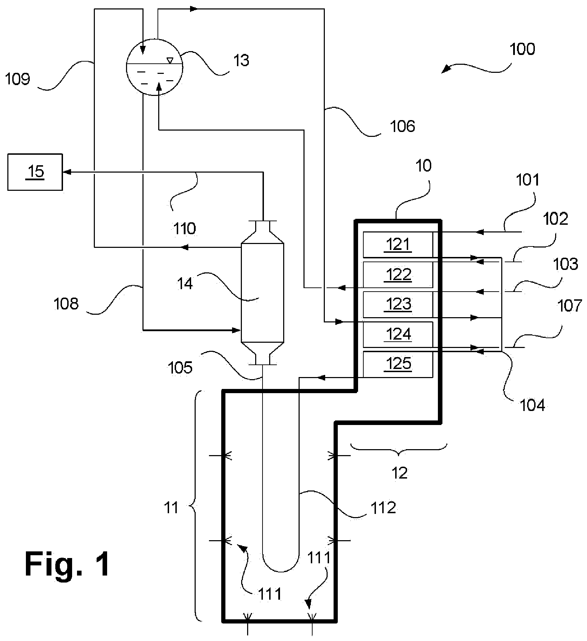

For reference, and to further illustrate the background of the invention, a conventional fired steam cracking arrangement is illustrated in Figure 1 in a highly simplified, schematic partial representation and is designated 100.

The steam cracking arrangement 100 illustrated in Figure 1 comprises, as illustrated with a reinforced line, one or more cracking furnaces 10. For conciseness only, "one" cracking furnace 10 is referred to in the following, while typical steam cracking arrangements 100 may comprise a plurality of cracking furnaces 10 which can be operated under the same or different conditions. Furthermore, cracking furnaces 10 may comprise one or more of the components explained below.

The cracking furnace 10 comprises a radiant zone 11 and a convection zone 12. In other embodiments than the one shown in Figure 1, also several radiant zones 11 may be associated with a single convection zone 12, etc.

In the example illustrated, several heat exchangers 121 to 125 are arranged in the convection zone 12, either in the arrangement or sequence shown or in a different arrangement or sequence. These heat exchangers 121 to 125 are typically provided in the form of tube bundles passing through the convection zone 12 and are positioned in the flue gas stream from the radiant zone 11.

In the example illustrated, the radiant zone 11 is heated by means of a plurality of burners 111 arranged on the floor and wall sides of a refractory forming the radiant zone 11, which are only partially designated. In other embodiments, the burners 111 may also be provided solely at the floor side or solely at the wall sides. The latter may e.g. be the case when pure hydrogen is used for firing.

In the example illustrated, a gaseous or liquid feed stream 101 containing hydrocarbons is provided to the steam cracking arrangement 100. It is also possible to use several feed streams 101 in the manner shown or in a different manner. The feed stream 101 is preheated in the heat exchanger 121 in the convection zone 12.

In addition, a boiler feed water stream 102 is passed through the convection zone 12 or, more precisely, the heat exchanger 122, where it is preheated. The boiler feed water stream 102 is thereafter introduced into a steam drum 13. In the heat exchanger 123 in the convection zone 12, a process steam stream 103, which is typically provided from a process steam generation system located outside the furnace system of the steam cracking arrangement 100, is further heated and, in the example illustrated in Figure 1, thereafter combined with the feed stream 101.

A stream 104 of feed and steam formed accordingly is passed through a further heat exchanger 125 in the convection zone 12 and is thereafter passed through the radiant zone 11 in typically several cracking coils 112 to form a cracked gas stream 105. The illustration in Figure 1 is highly simplified. Typically, a corresponding stream 104 is evenly distributed over into a number of cracking coils 112 and a cracked gas formed therein is collected to form the cracked gas stream 105.

As further illustrated in Figure 1, a steam stream 106 can be withdrawn from the steam drum 13 and can be (over)heated in a further heat exchanger 124 in the convection zone 12, generating a high-pressure steam stream 107. The high-pressure steam stream 107 can be used in the steam cracking arrangement 100 at any suitable location and for any suitable purpose as not specifically illustrated.

The cracked gas stream 105 from the radiant zone 11 or the cracking coils 112 is passed via one or more transfer lines to a quench exchanger 14 where it is rapidly cooled for the reasons mentioned. The quench exchanger 14 illustrated here represents a primary quench (heat) exchanger. In addition to such a primary quench exchanger 14, further quench exchangers may also be present.

The cooled cracked gas stream 110 is passed to further process units 15 which are shown here only very schematically. These further process units 15 can, in particular, be process units for scrubbing, compression and fractionation of the cracked gas, and a compressor arrangement including a steam turbine, which may be operated using steam from the steam drum 13, being indicated with 16.

In the example shown, the quench exchanger 14 is operated with a water stream 108 from the steam drum 13. A steam stream 109 formed in the quench exchanger 14 is returned to the steam drum 13.

The exposure of the cracking coils to the carbon rich gas at high temperatures can lead to carburisation of the material of the cracking coils, i.e. a process, wherein carbon is incorporated into the coil material. In particular, metals of the coil material can react with carbon and form metal carbides, i.e. compounds of carbon and metal. Cracking coils are usually made of heat-resisting alloys comprising e.g. iron, nickel and chromium. Since carbon readily bonds with chromium, exposure of these kinds of alloys to carbon rich gases can lead to internal chromium carbide formation.

Carburisation of that kind can have negative effects on the coil material and can in particular reduce the mechanical properties of the alloy and lead to embrittlement of the material. The bonding of chromium to carbon can e.g. result in chromium depletion in the matrix, reducing the resistance of the metal to oxidation and sulphidation.

Carburisation can thus reduce the remaining lifetime of cracking coils and can ultimately lead to the necessity of replacing cracking coils, when the coil material can not fulfil minimum required mechanical properties any more in order to withstand the loads during operation of the steam cracking furnace.

Disclosure of the invention

The present invention relates to a method of determining a carburisation model of a coil of a steam cracking furnace as well as to a computing unit, a computer program and a machine-readable storage medium for performing the method with the features of the independent claims. Further advantages and embodiments of the invention will become apparent from the description and the appended figures.

The steam cracking furnace can be used for performing a cracking or steam cracking reaction for the production of olefins and other base chemicals, e.g. ethylene $C_2H_4$ or propylene $C_3H_6$. The furnace comprises one or several coils or cracking coils, through which process gas to be cracked is led. These coils are particularly arranged inside a refractory comprising at least one burner, which produces the thermal energy required for initiating and maintaining the endothermic cracking reactions. In the course of the present method, a model of carburisation of a coil of that kind is determined. It is to be understood that a corresponding carburisation model can accordingly be determined for several or all of the furnace coils.

A carbon gas or carbon rich gas is led through the coil during operation of the steam cracking furnace, particularly comprising carbon or carbon compounds like CO or hydrocarbons, such as methane, ethane, propane, naphtha, etc.

In a carburised portion or carburised zone or carburised layer of a wall of the coil, especially an inner part of the wall facing the carbon gas, carburisation of a material of the wall occurs. In particular, the wall material or a metal of the wall material reacts with the carbon gas led through the coil such that metal carbides are created. The coil wall material is particularly a heat-resisting alloy comprising e.g. iron, nickel and chromium. Particularly, carburisation of chromium occurs in this carburised portion, thus creating chromium carbide. Accordingly, in a carburised-free portion or carburised-free zone or carburised-free layer of the wall of the coil, especially an outer part of the wall facing away from the carbon gas, no carburisation of the material of the wall occurs, at least yet. That is, in this carburised-free portion, no carbides are created in the course of carburisation, at least yet.

At the beginning of the lifetime of the coil, there can particularly be a regular or initial amount of carbides, i.e. an initial carbon content in the wall of the coil. For example, chromium carbides in the coil wall material can provide a required creep resistance and high temperature strength of the coil. Carburisation during the coil lifetime particularly leads to precipitation of secondary carbides like $Cr_7C_3$, which can lead to sever embrittlement during service. Therefore, because of the interaction of the coil wall material with the carbon gas, the carbide content of the coil wall material will increase during lifetime of the coil. Hence, a corresponding carburised portion will form and continuously increase, whereas a corresponding carburised-free portion will decrease.

In particular, a coil wall portion can be defined as a carburised portion, if the carbon content of the corresponding wall portion is at least twice as much as a regular or initial carbon content of the regular wall material or especially at least twice as much as the initial carbon content of the wall at the beginning of the coil lifetime. Alloys usually used as coil wall material particularly have a carbon content around or less than 0.5 weigh percent. A wall portion can therefore for example be defined as carbide portion, if its carbon content is at least one weigh percent (1 wt.-%).

A first relation characterises a depth or thickness of the carburised portion in dependence of time, particularly the lifetime of the coil, and further in dependence of a growth parameter. This first relation particularly characterises a rate at which the carburised portion expands over time or, respectively, a rate at which the carburised-free portion decreases overtime. This growth parameter is particularly a temperature dependent, material specific parameter, which characterises, how the carburised portion grows or expands depending on the coil wall temperature. This depth or thickness of the carburised portion and a corresponding depth or thickness of the carburised-free portion particularly add up to the total depth or thickness of the coil. During lifetime of the coil, the depth of the carburised portion will increase and the depth of the carburised-free portion will decrease. The term "depth" or "thickness" is particularly to be understood as the corresponding dimension in a radial direction of the coil. In the following, the "depth of the carburised portion" will also be referred to as "carburisation depth" or "depth of carburisation".

A second relation characterises the growth parameter in dependence of a temperature, in particular a temperature of the coil wall, and further in dependence of at least one, in particular two material specific constants. This first and second relation therefore provide a theoretical or general characterisation for the growth of the carburised portion over the coil lifetime, depending on the specific material of the coil wall and further depending on the specific temperature, to which the coil wall is exposed during operation of the steam cracking furnace.

These two relations particularly form the basis for the carburisation model according to the present method. In particular, specific values of the material specific constants for the specific material of the present coil walls are determined. Thus, the specific growth parameter for the present coil wall material can be determined. Hence, based on these specific values material specific constants, the carburisation model can be determined, as shall be explained hereafter.

The present method comprises the step of determining, especially measuring, reference temperature values at reference positions of a wall of a reference coil during operation of a reference steam cracking furnace comprising the reference coil. This reference coil of the reference steam cracking furnace and the present coil of the present steam cracking furnace are particularly made of the same or at least essentially the same material. Thus, this reference furnace and its reference coil can be evaluated in order to learn its behaviour and its specific values, which can then be used for determining the carburisation model of the present coil.

These reference positions can e.g. be chosen according to predetermined criteria or can e.g. be positions with large carburised portions or with high temperatures during the reference furnace operation. In particular the various reference positions are located at different locations or sections of the reference coil, especially in order to evaluate different effects of carburisation at the different coil positions over the entire length of the reference coil. For example, a multitude of coil wall temperatures can be determined or measured during operation of the reference furnace in order to control cracking process at various positions throughout the entire coil length. Based on this multitude of temperature values, specific positions can be chosen as the corresponding reference positions.

It shall be noted, that this reference steam cracking furnace and the corresponding reference coil can especially be an actual furnace and an actual coil or can particularly be a simulated furnace and a simulated coil. A corresponding actual reference furnace is particularly actually operated and performs an actual cracking operation in order to produce corresponding olefins or base chemicals. For example, this reference furnace can be manufactured with a similar or the same design as the present furnace, e.g. by the same manufacturer, and can be operated under the same or similar condition as the present furnace, e.g. by the same operator as the present furnace. The reference furnace can for example also be a test furnace build for testing or evaluation purposes. The reference temperature values can especially be measured during the lifetime and operation of the furnace. A corresponding simulated furnace and simulated coil can particularly be part of a theoretical computer simulation or a digital replica of an actual furnace, e.g. based on empirical measurements of an actual furnace, e.g. a so called "digital twin". In this case, the reference temperature values can e.g. be determined as simulated values.

It shall further be noted, that the reference steam cracking furnace and the present steam cracking furnace to be modelled can particularly also be the same furnace. For example, the reference coil in this case can e.g. be a coil used formerly in the furnace, e.g. a coil already at the end of its lifetime, which was replaced by a new coil. This old reference coil can thus be evaluated in order to learn its carburisation behaviour. This knowledge can then be used to create the carburisation model for the corresponding new coil.

The method further comprises the step of determining, especially measuring, reference carburised portion values of a depth of a carburised portion at the reference positions of the wall of the reference coil at a reference point in time, particularly at a reference point in lifetime of the reference coil. Thus, actual carburisation of the reference coil at the different reference positions is evaluated, particularly after a specific operation time or a specific portion of the reference coil lifetime. For example, at the end of the reference coil lifetime, e.g. after the reference coil was replaced by a new coil in the reference furnace, the reference coil can be evaluated and the corresponding reference carburised portion values can be determined or measured.

The present method further comprises the step of determining the at least one material specific constant in dependence of the first relation and the second relation and further in dependence of the reference temperature values and the reference carburised portion values. Thus, based on the empirical values for the reference temperature and the reference carburised portion and based on the theoretical first and second relation, specific values for the material of the present coil are determined.

Further, the present method comprises the step of determining the carburisation model of the coil in dependence of the determined at least one material specific constant and further in dependence of the first relation and the second relation, wherein this carburisation model characterises the depth of the carburised portion of the coil of the steam cracking furnace at a specific position of the wall of the coil in dependence of time, particularly the lifetime of the coil, and in dependence of a temperature at the specific position of the wall of the coil. By evaluating the reference temperature values and the reference carburised portion values at the various reference positions, carburisation behaviour at different coil positions with different coil wall temperatures can be learned. This knowledge can be applied to the present coil in order to extrapolate the carburisation behaviour of the present coil. In particular, the present carburisation model determines, extrapolates or predicts the carburisation depth of the present coil in dependence of lifetime and in dependence of the coil wall temperature at the specific position. The carburisation model allows e.g. to determine a current depth of the carburised portion at a current time or a future carburisation depth at a future time point. For example, also a development or trend of the carburised portion depth over a certain time interval can be determined by means of the carburisation model.

The present invention provides a possibility to evaluate carburisation of the cracking coil. It can particularly be determined, how much carburisation in the coil wall occurred during the coil lifetime thus far, and how the mechanical properties of the coil are affected by the metal carbide formation. Especially, negative effects on the coil wall can be evaluated, like reduction of mechanical properties and embrittlement of the wall material. Particularly, the end of the coil lifetime can be determined, i.e. a point in time, when the coil wall properties are affected such that minimum required mechanical properties cannot be fulfilled any more in order to withstand the loads during operation of the steam cracking furnace.

It is usually not easily possible or not even possible at all to determine a carburised portion depth of a cracking coil during operation of the steam cracking furnace, particularly not via non-destructive examination. It is usually necessary to destroy and to dissect the coil in order to evaluate its carburised portions. The present invention, however, allows evaluating coil carburation depth during steam cracking furnace operation, particularly without physically examining the coil itself, without any amendments of the furnace itself, and particularly without additional measurement instruments.

The present invention allows to significantly improve operation and efficiency of the cracking furnace, to increase maintenance intervals and to reduce costs, e.g. by avoiding downtime due to repairs and maintenance, and by avoiding unnecessarily early replacements of coils although their maximum possible lifetime was not reached yet.

Advantageously, the method further comprises the step of determining a remaining lifetime of the coil in dependence of the carburisation model. It can especially be estimated, how much longer the coil can safely be used before it cannot fulfil the corresponding required mechanical properties any more. Therefore, a maximum possible lifetime of the coil can be determined and an optimum time can be determined to replace the coil by a new one. Repair, material, and maintenance costs can especially be reduced.

Preferably, the method further comprises the step of determining a current depth of the carburised portion at the specific position in dependence of the carburisation model. In particular, the current depth is further determined in dependence of a temperature at this specific position and in dependence of the current lifetime of the coil. Especially, a multitude of temperature values is determined at this specific position during furnace operation, e.g. continuously or in predetermined time intervals, e.g. once per day, once per week, etc. The current carburised portion depth is especially determined in dependence of a statistic value of this multitude of temperature values, e.g. a mean or median value. Thus, the current carburisation depth at the specific coil position is particularly determined in dependence of an average temperature at the specific position of the coil wall. The coil carburisation depth can thus be monitored during its lifetime. Furnace operation can particularly be controlled in dependence of the depth of the carburised portion.

Advantageously, the method further comprises the step of determining whether the current depth of the carburised portion reaches a predetermined threshold. This threshold can especially correspond to a permissible maximum for the carburised portion depth. When the carburised portion depth reaches the threshold, the coil particularly cannot fulfil the corresponding required mechanical properties any more and can not be used safely anymore. The coil can expediently be replaced when current depth reaches this threshold. Thus, an optimum time for replacing the coil can be determined, thereby reducing repair, material, and maintenance costs.

Preferably, the method further comprises the step of controlling operation of the steam cracking furnace in dependence of the carburisation model. Particularly, the furnace operation is controlled in dependence of the current depth of the carburised portion. Expediently, the current depth can be evaluated and it can be determined, whether maintenance, repair, or replacement of the coil has to be performed. The operation and efficiency of the steam cracking furnace can thus be increased.

According to an advantageous embodiment, particularly in order to determine the reference positions of the wall of the reference coil, the method further comprises the steps of dividing the reference coil in a number of different sections and determining for each section a position with the highest temperature in the wall during operation of the reference steam cracking furnace as the reference positions of the wall of the reference coil. Particularly, the reference coil is divided in four sections, especially a top section, a bottom section, a bend section, and a sidewall section.

Particularly, for each section a position with the highest temperature at an outer surface of the wall can be determined as the corresponding reference position. For this purpose, the temperature of the outer coil surface can particularly be determined by means of an expedient temperature measurement system, e.g. pyrometer, infrared thermography, etc. It is for example also possible, to determine for each section a position with the highest temperature in the middle of the wall or at an inner surface of the wall as the corresponding reference position. The middle of the wall is especially to be understood as the middle of the depth or thickness of the wall in a radial direction of the coil. In particular, the middle of the wall is to be understood as a point, position or location inside the wall, at which a distance in radial direction to an inner end of the wall and a distance in radial direction to an outer end of the wall, i.e. particularly a distance in radial direction to an inner surface of the wall and a distance in radial direction to an outer surface of the wall, are equal or at least essentially equal.

Since higher temperatures can lead to more carburisation, these positions with the highest temperatures can particularly correspond to the positions with the highest carburisation depths. Thus, in each of the reference coil sections, a position with presumably the highest or at least with high carburisation depth is determined as corresponding reference position.

According to a preferred embodiment, determining the reference temperature values at the reference positions of the wall of the reference coil comprises the steps of determining, especially measuring, for each reference position a multitude of individual temperature values, particularly in predetermined time intervals or at predetermined points in time, and determining for each reference position a statistical value, especially a mean value, of the corresponding individual temperature values as the reference temperature value at the corresponding reference position. Thus, especially an average temperature at the reference positions is considered for evaluating the reference carburised portion values at these reference positions. For example, this multitude of temperature values can be determined or measured during regular operation of the reference furnace and can e.g. be used for controlling the furnace operation or for supervising purposes. Particularly, these temperature values are determined in regular time intervals, e.g. once per hour, once per day, once per week etc., e.g. at a given time each day. For example, the multitude of temperature values can be measured by means of expedient temperature measurement systems, e.g. pyrometers, infrared thermography, etc.

Advantageously, determining the at least one material specific constant comprises the steps of determining in dependence of the first relation, in dependence of the reference carburised portion values, and in dependence of the reference point in time for each of the reference positions a corresponding reference value for the growth parameter, and determining the at least one material specific constant in dependence of the second relation, in dependence of reference temperature values, and in dependence of the reference values for the growth parameter. Therefore, for each reference position a value pair comprising the corresponding reference value for the growth parameter and the corresponding reference temperature value is determined. In a corresponding coordinate system, a fit or curve, e.g. a linear fit, can be determined by means of these value pairs. In particular, this fit depends on the second relation. The material specific constants can especially be determined by means of this fit, e.g. as a slope of the fit or as an intercept of the fit with a coordinate axis.

Preferably, determining the carburisation model further comprises the steps of determining in dependence of the second relation, in dependence of the determined at least one material specific constant, and in dependence of the temperature at the specific position of the wall of the coil a specific value for the growth parameter, and determining in dependence of the first relation, and in dependence of the specific value for the growth parameter a relation for the depth of the carburised portion in dependence of time. This specific value for the growth parameter expediently characterises, how the carburised portion grows or expands at the specific wall position to be evaluated depending on the temperature, to which this specific wall position is exposed during furnace operation. Therefore, an individual embodiment of the first relation specifically adapted to the specific wall position to be evaluated is expediently determined as the carburisation model, particularly characterising a rate at which the carburised portion at the specific position expands over the coil time.

According to a particularly advantageous embodiment, the first relation is the so called Wagner's theory and characterises the depth $w$ of the carburised portion in dependence of time or lifetime t as follows:

$$w^2 - w_0^2 = 2 k_p t \,,$$

wherein $w_0$ is an original depth of the carburised portion, particularly at a beginning of the lifetime of the coil, and wherein $k_p$ is the growth parameter.

Particularly, a steady state condition is assumed for this first relation. In order to describe fluctuating temperature profiles in the steam cracking furnace, the first relation can be amended as follows:

$$w = \sqrt{2 \left( k_p(T_1) + k_p(T_2) + k_p(T_3) + \ldots + k_p(T_n) \right) \Delta t + w_0^2}$$

wherein $\Delta t$ is a time interval, in which the various temperature values $T_1, T_2, T_3, \ldots, T_N$ are determined. The time interval $\Delta t$ is particularly constant and can e.g. be hourly, daily, or weekly.

According to a particularly preferred embodiment, the second relation is an Arrhenius equation and characterises the growth parameter $k_p$ in dependence of the temperature $T$ as follows:

$$k_p = k_0 \exp\left( -\frac{Q}{RT} \right) \,,$$

  wherein $k_0$ is a first material specific constant characterising a pre-exponential factor, wherein Q is a second material specific constant characterising an activation energy, and wherein R is the universal gas constant. The growth parameter $k_p$ therefore characterises a parabolic growth and is particularly given in the unit $[\mu m^2/h]$.

A computing unit according to the invention is configured, in particular by a computer program, to carry out an inventive method.

The implementation of the invention in the form of software is advantageous because this allows particularly low costs, especially if an executing processing unit is still being used for other tasks and therefore is present anyway. Suitable media for providing the computer program are in particular discettes, hard drives, flash memory, EEPROM, CD-ROMs, DVDs etc. Downloading a program via computer networks (Internet, intranet, etc.) is possible.

Further advantages and developments of the invention are specified in the description and the associated drawings.

It should be noted that the previously mentioned features and the features to be further described in the following are usable not only in the respectively indicated combination, but also in further combinations or taken alone, without departing from the scope of the present invention.

The present invention will now be described further, by way of example, with reference to the accompanying drawings, in which

Figure 1     schematically shows a steam cracking furnace, wherein a carburisation model of a coil of the steam cracking furnace can be determined in the course of a preferred embodiment of the method according to the present invention.

Figure 2     schematically shows a preferred embodiment of the method according to the present invention as a block diagram.

Figure 3     schematically shows a coil of a steam cracking furnace, on which a preferred embodiment of the method according to the present invention can be based.

Figure 4     schematically shows a diagram of a logarithm of a growth parameter in dependence of an inverse temperature, which can be determined in the course of a preferred embodiment of the method according to the present invention.

Figure 5     schematically shows a diagram of a logarithm of a growth parameter in dependence of an inverse temperature, which can be determined in the course of a preferred embodiment of the method according to the present invention.

Figure 6     schematically shows a diagram of growth parameter in dependence of a temperature, which can be determined in the course of a preferred embodiment of the method according to the present invention.

Figure 7     schematically shows a diagram of a depth of a carburised portion in dependence of time, which can be determined in the course of a preferred embodiment of the method according to the present invention.

Figure 8     schematically shows a diagram of a depth of a carburised portion in dependence of time, which can be determined in the course of a preferred embodiment of the method according to the present invention.

Detailed description

Figure 1 schematically shows a steam cracking arrangement 100 comprising a steam cracking furnace 10 and was already described at the outset.

As explained above, the process gas comprising a mixture of hydrocarbons and steam is passed through the radiant zone 11 in typically several cracking coils 112 to form the cracked gas stream 105. The radiant zone 11 can be heated by means of a plurality of burners 111 arranged on the floor and wall sides of a refractory forming the radiant zone 11.

The exposure of the cracking coils 112 to the carbon rich process gas at high temperatures can lead to carburisation of the material of the cracking coils 112. Therefore, a carburised portion can form at an inner part of the coil wall facing the carbon gas. This carburised portion can continuously expand during lifetime of the coils 112 and can ultimately lead to the end of lifetime of the coil 112.

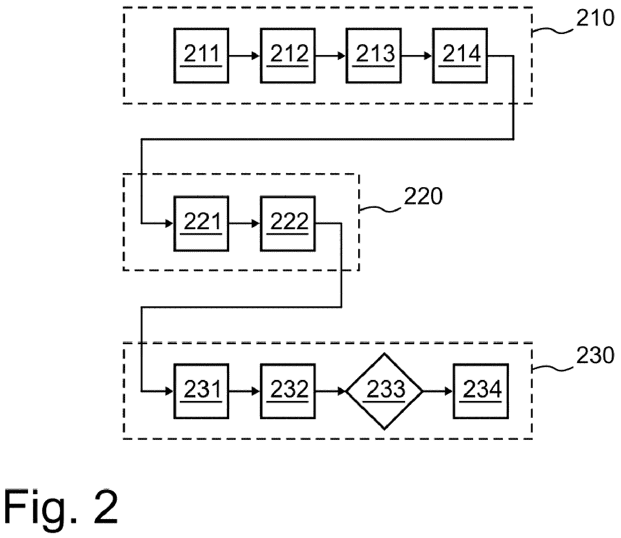

In the course of a preferred embodiment of the method according to the present invention a carburisation model can be determined in order to determine a depth of a carburised portion of a coil 112 of a steam cracking furnace 10 of that kind, as shall be explained hereafter with reference to the figures 2 to 9.

Figure 2 schematically shows a preferred embodiment of the method according to the present invention as a block diagram.

In a first phase 210, a reference steam cracking furnace comprising a reference coil is evaluated in order to determine a multitude of reference values. In a second phase 220, the carburisation model is determined for a present coil of a present steam cracking furnace in dependence of these reference values. In a third phase 230, the present steam cracking furnace is operated, particularly in dependence of the determined carburisation model.

The reference steam cracking furnace and the reference coil can e.g. be of the same or at least a similar design as the present furnace and the present coil to be modelled. For example, the reference furnace and the present furnace can be manufactured by the same manufacturer and can be operated by the same operator.

The reference furnace and the present furnace can also be the same furnace. In the first phase 210, this furnace can e.g. regularly be operated with the reference coil in order to learn the reference values. For example at the end of the reference coil's lifetime, this coil can be replaced by the present coil, with which the furnace is then regularly operated in the third phase 230.

The reference coil and the present coil are particularly made of the same or at least essentially the same material, especially a heat-resisting alloy comprising iron, nickel and chromium. For example this material can be a so called "Centralloy ET 45 Micro" alloy with a composition in mass percentage (wt.-%) of 0.45 wt.-% carbon, 1.6 wt.-% silicon, 1.0 wt.-% manganese, 35 wt.-% chromium, 16 wt.-% iron and 1.0wt.-% niobium and with additions of titanium, zirconium, and rare earth elements and with a balance of nickel.

Since carbon readily bonds with chromium, exposure of this alloy to the carbon rich process gas in the steam cracking furnace can lead to internal chromium carbide formation. A carburised portion or carburised layer of the corresponding coil wall, in which carburisation occurs, is e.g. defined as a portion or layer with a carbon content at least twice as much as the carbon content of this alloy, e.g. with a carbon content of least one 1 wt.-%.

In step 211, the reference steam cracking furnace is regularly operated with the reference coil, e.g. until the end of the reference coil lifetime. During this regular operation, a multitude of temperature values is determined or measured at various positions throughout the reference coil in predetermined time intervals, e.g. once per day. For example, pyrometers can be used to measure these temperature values. Thus, for each of these various positions, a multitude of temperatures is collected during the lifetime of the reference coil.

Particularly, these temperature values correspond to a temperature in the middle of the reference coil wall in radial direction, i.e. at a point or location inside the reference coil wall, at which a radial distance to an inner surface and a radial distance to an outer surface of the wall are equal or at least essentially equal.

In step 212, reference positions of the reference coil are determined. For this purpose, the reference coil is divided into a number of different sections. Each of these sections comprises a multitude of the above referenced positions, at which temperature values are determined in step 211. Based on these multitudes of temperature values collected in step 211, for each section a maximum temperature position is determined as reference position with the highest temperature in the middle of the wall in the corresponding section.

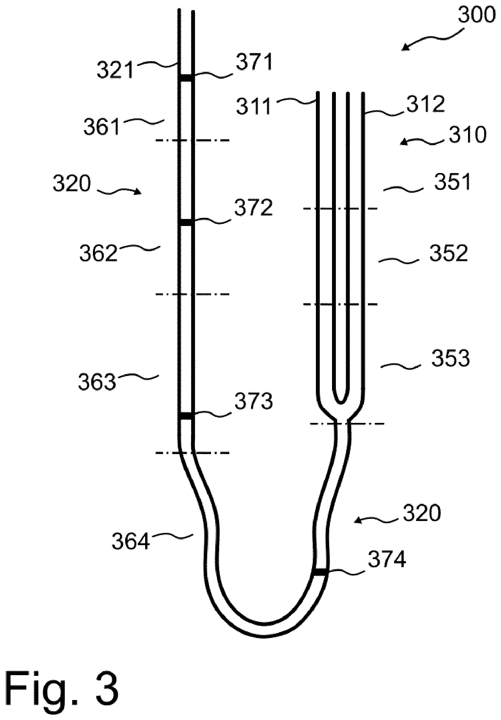

This step of determining the reference position shall now be explained with reference to figure 3, which schematically shows a corresponding coil 300 of a steam cracking furnace.

The reference coil and the present coil are particularly identically constructed or at least essentially identically constructed and can both expediently be constructed according to the coil 300 shown in figure 3.

The coil 300 comprises an inlet coil 310 and an outlet coil 320, wherein this inlet coil 310 comprises two individual inlet coils 311, 312, and wherein the outlet coil 320 comprises one individual outlet coil 321.

For example, the inlet coil 310 can be divided into a top section 351, a sidewall section 352, and a bottom section 353. The outlet coil 320 can e.g. be divided into a top section 361, a sidewall section 362, a bottom section 363 and a bend section 364.

The inlet coil 310 and the outlet coil 320 can for example be evaluated together in the first phase 210 and reference positons can be determined throughout all the sections of the inlet coil 310 and the outlet coil 320. It is also possible to evaluate the inlet coil 310 and the outlet coil 320 individually and separately from each other.

In the present example, the outlet coil 320 shall be evaluated as the reference coil separately from the inlet coil 310. For example, for each of the four reference coil sections, i.e. the top section 361, the bottom section 362, the sidewall section 363, and the bend section 364, a corresponding reference position 371, 372, 373, 374 with the maximum wall temperature of the corresponding section is determined in step 212.

In step 213, a reference temperature value $T_{ref1}$, $T_{ref2}$, $T_{ref3}$, $T_{ref4}$ is determined for each of these reference positions 371, 372, 373, 374, respectively, expediently as a statistical value of the multitude of temperature values measured at this specific position in step 211, e.g. as a mean value of all the measured temperature values measured at this position 371, 372, 373, 374.

In step 214, a reference carburised portion value $W_{ref1}$, $W_{ref2}$, $W_{ref3}$, $W_{ref4}$ is determined for each of the reference positions 371, 372, 373, 374 at a reference point in time or lifetime $t_{ref}$ of the reference coil. Particularly, this reference point in time $t_{ref}$ can correspond to the end of the lifetime of the reference coil. These reference carburised portion values $W_{ref1}$, $W_{ref2}$, $W_{ref3}$, $W_{ref4}$ particularly correspond to the depth of the carburised portion at the corresponding reference position 371, 372, 373, 374 at the corresponding reference point in time. For example, these reference carburised portion values $W_{ref1}$, $W_{ref2}$, $W_{ref3}$, $W_{ref4}$ can be measured, e.g. by means of a destructive examination, e.g. by dissecting the reference coil.

Therefore, for each of the four reference positions 371, 372, 373, 374 of the reference coil, three specific reference values are determined, namely the corresponding reference temperature value $T_{ref1}$, $T_{ref2}$, $T_{ref3}$, $T_{ref4}$, the corresponding reference carburised portion value $W_{ref1}$, $W_{ref2}$, $W_{ref3}$, $W_{ref4}$, and the reference point in time $t_{ref}$. In dependence of these specific reference values and further in dependence of two general relations, the carburisation model is determined in the second phase 220, as will be explained hereafter.

A first relation is the so called Wagner's theory and characterises the depth w of the carburised portion of the coil in dependence of the coil lifetime $t$ and in dependence of a growth parameter $k_p$ as follows:

$$w^2 - w_0^2 = 2k_p t,$$

wherein $w_0$ is an original depth of the carburised portion at the beginning of the coil lifetime.

A second relation is an Arrhenius equation and characterises this growth parameter $k_p$ in dependence of the temperature $T$ as follows:

$$k_p = k_0 \exp\left(-\frac{Q}{RT}\right),$$

wherein $k_0$ is a first material specific constant characterising a pre-exponential factor, wherein Q is a second material specific constant characterising an activation energy, and wherein R is the universal gas constant.

In a first step 221 of the second phase 220, these material specific constants $k_0$, Q are determined in dependence of the first relation, in dependence of the second relation, and further in dependence of the reference temperature values and the reference carburised portion values.

In particular, for each of the reference positions 371, 372, 373, 374, the corresponding reference carburised portion value $W_{ref1}$, wref2, wref3, $W_{ref4}$ and the reference point in time $t_{ref}$ are used together with the first relation, in order to determine a corresponding reference value for the growth parameter $k_{ref1}$, $k_{ret2}$, $k_{ref3}$, $k_{ref4}$.

Thus, for each of the reference positions 371, 372, 373, 374, a value pair $(k_{ref1}, T_{ref1})$, $(kref2, T_{ref2})$, $(k_{ref3}, T_{ref3})$, $(k_{ref4}, T_{ref4})$ comprising the corresponding reference value for the growth parameter $k_{ref1}$, $k_{ret2}$, $k_{ref3}$, $k_{ref4}$ and the corresponding reference temperature value $T_{ref1}$, $T_{ref2}$, $T_{ref3}$, $T_{ref4}$ is determined.

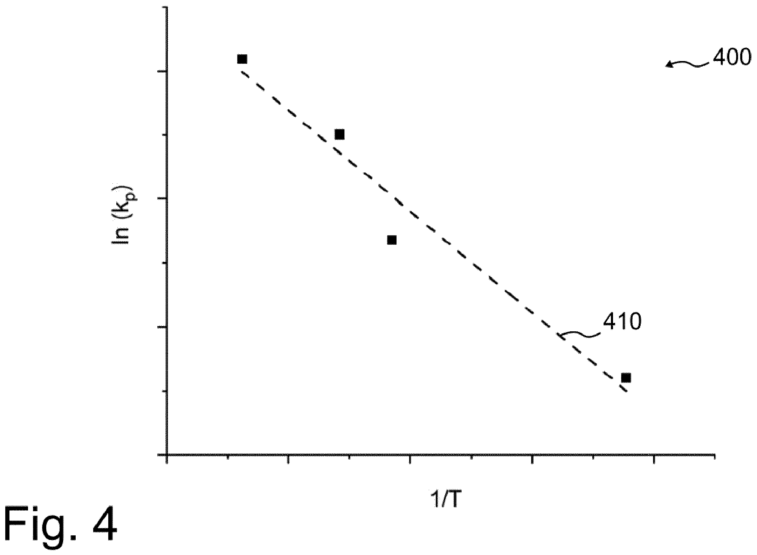

The value pairs $(k_{ref}, T_{ref})$ are converted into value pairs $(\ln(k_{ref}), 1/T_{ref})$ of a logarithm of the reference growth parameter $\ln(k_{ref})$ and the inverse reference temperature $(1/T_{ref})$. These value pairs are plotted in a diagram of the logarithm of the growth parameter $\ln(k_p)$ in dependence of an inverse temperature $(1/T)$, as shall be explained with reference to figure 4, which schematically shows a corresponding diagram 400.

As can be seen in figure 4, four measured points are plotted in this diagram 400, each of these points corresponding to one of the reference positions. A fit 410 is laid through the measured points.

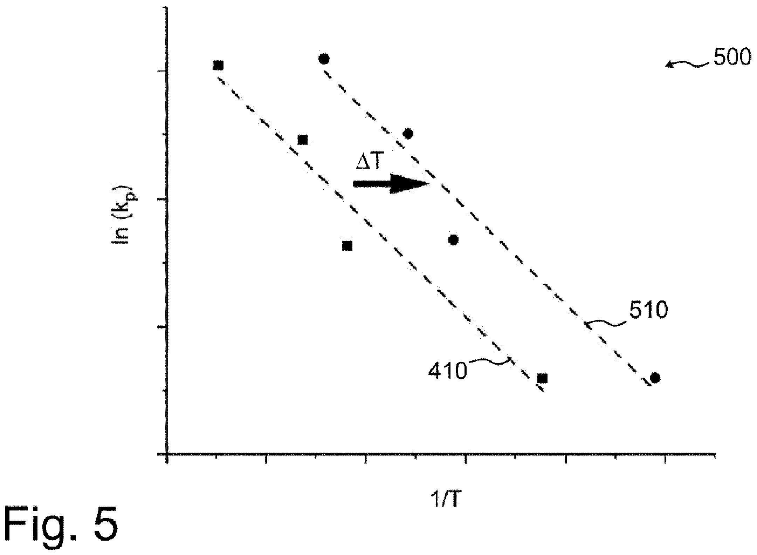

Since the first and second relations are based on an ideal behaviour, a correction is applied to the fit 410 in order to compensate for differences between this ideal behaviour and the actual behaviour of the reference coil during its lifetime, as shall be explained with reference to figure 5.

Figure 5 schematically shows a diagram 500 of the logarithm of the growth parameter $\ln(k_p)$ in dependence of the inverse temperature $(1/T)$ corresponding to diagram 400 of figure 4.

As can be seen in diagram 500, the fit 410 is shifted by a correction value $\Delta T$ to a corrected fit 510. The slopes of the fit 410 and the corrected fit 510 are particularly identical, since temperature differences between the different reference positions are consistent in the ideal and the actual behaviour. However, since the maximal and minimal temperatures and duration of cracking periods can change during the actual operation compared to the ideal behaviour, the fit 410 is shifted by the temperature correction value $\Delta T$.

By means of the corrected fit 510, the material specific constants $(k_0, Q)$ of the second relation are determined. Applying a logarithm to the second relation yields the following relation, characterising the corrected fit 510:

$$\ln(k_p) = \ln(k_0) - \frac{Q}{R}\frac{1}{T}$$

Thus, the intercept of the corrected fit 510 with the y-axis can be used to determine the pre-exponential factor ko. The slope of the corrected fit 510 can be used to determine the activation energy Q. For example, the specific value for the activation energy Q can be in the interval between 1 kJ/mol and 1000 kJ/mol, or e.g. in the interval between 50 kJ/mol and 750 kJ/mol, or e.g. in the interval between 100 kJ/mol and 500 kJ/mol.

In a step 222 of the second phase 220, the carburisation model is determined in dependence of these specific values for $k_0$ and Q, as shall be explained hereafter.

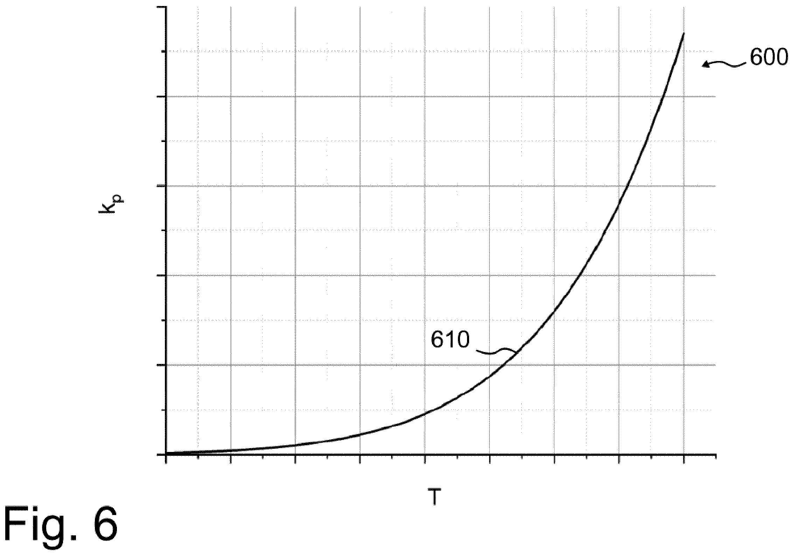

Figure 6 schematically shows a diagram 600 of the growth parameter $k_p$ in dependence of the temperature. The curve 610 represents the temperature dependent growth parameter $k_p(T)$ according to the second relation with the above referenced specific values for the activation energy Q and the pre-exponential factor $k_0$ for the specific material of the reference coil and the present coil, i.e. the "Centralloy ET 45 Micro" alloy.

The diagram 600 can particularly be used in order to determine a temperature or temperature profile, to which the present coil shall be exposed during operation of the present steam cracking furnace. Based on diagram 600, economic solution for both coil lifetime and olefin production can be determined by choosing expedient temperatures or temperature profiles for operation of the the present coil and the present furnace.

Depending on the specific temperature $T_{specific}$, to which a specific position of the wall of the present coil is exposed during operation of the present steam cracking furnace, a corresponding specific value for the growth parameter

$k_p(T_{specific})$ can be determined by means of diagram 600. Depending on this specific value for the growth parameter $k_p(T_{specific})$ and depending on the first relation, the carburisation model can be determined, characterising the depth of the carburised portion w at this specific position of the coil wall. For example, this specific position can be a position corresponding to the reference position 374 of the sidewall section 364 of the coil.

Based on the first relation, the following relation for the width w of the carburised portion at the specific position in dependence of the coil lifetime t can be determined as the carburisation model:

$$w = \sqrt{2k_p\left(T_{specific}\right)t + w_0^2}$$

Since a steady state condition is expediently assumed for the first relation, an amended or corrected version of the above referenced relation can be determined as the carburisation model, which takes into account fluctuating temperatures or temperature profiles in the steam cracking furnace:

$$w = \sqrt{2\left(k_p(T_1) + k_p(T_2) + k_p(T_3) + \dots + k_p(T_n)\right)\Delta t + w_0^2}$$

$\Delta t$ refers to a time interval, in which the various temperature values $T_1$, $T_2$, $T_3$, ... , $T_N$ are determined, an can e.g. be hourly, daily, or weekly.

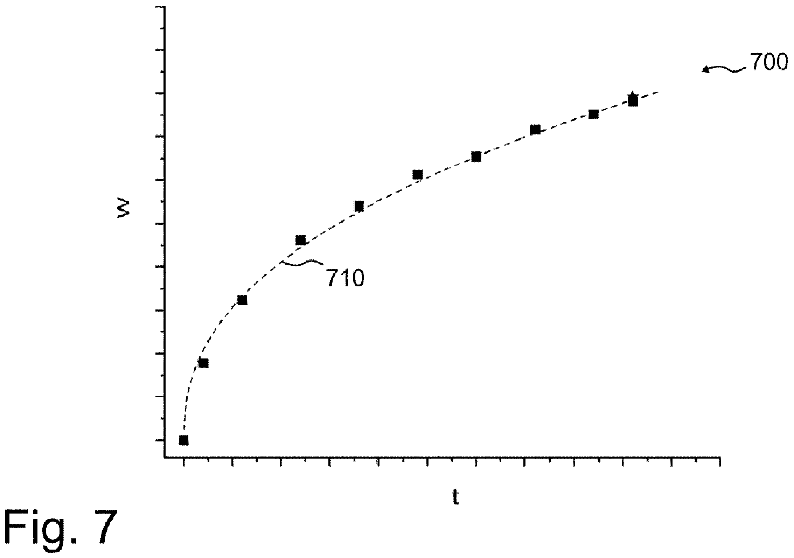

Figure 7 schematically shows a diagram 700 of the depth w of the carburised portion of the present coil wall at the specific position in dependence of the coil lifetime t according to the above referenced relation.

The individual rectangles represent estimated, modelled carburisation depths and curve 710 represents a fit through these estimated depths. As can be seen, increase of the carburisation depth is steep at the beginning of coil lifetime, but is subsequently less pronounced due to the parabolic behaviour.

The square of the estimated, modelled carburisation depths, $w^2$, according to diagram 700 can further be plotted as a function of coil lifetime t. A slope of a linear fit through these $w^2$ values corresponds to the parabolic growth parameter $k_p$ according to the first relation.

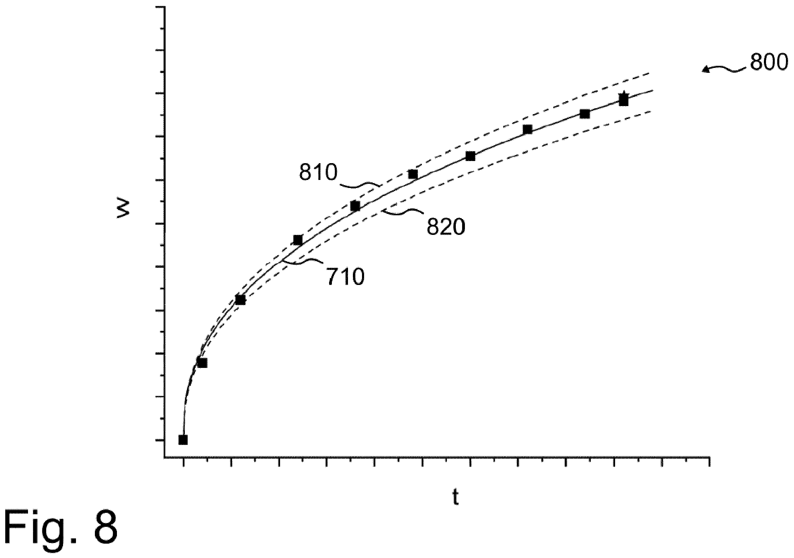

Furthermore, in order to take into account possible errors for temperature measurements, a temperature deviation or temperature error correction of $\pm 10°C$ can be assumed, which corresponds to a temperature amplitude of $20°C$. Thus, an error corrected carburisation model can be determined, as shall be explained with reference to figure 8.

Figure 8 schematically shows a diagram 800 of the carburisation depth w in dependence of the coil lifetime corresponding to diagram 700 of figure 7.

Diagram 800 shows the fit 710 through the estimated, modelled carburisation depths as well as the corresponding temperature error correction 810 and 820 of $\pm 10°C$. The scattering range in determining the carburisation depth with the present carburisation model can e.g. be approximately $\pm 200$ $\mu m$, only a minor deviation considering metallographic investigation.

This carburisation model is used in the third phase 230 for operating the steam cracking furnace. In a step 231 of the third phase, the furnace is regularly operated with the present coil. In step 232, the carburisation model is used to determine current depth of carburisation at the specific coil wall position in dependence of the current lifetime of the coil. In step 233, it is determined whether this current carburisation depth reaches a predetermined threshold. This threshold particularly corresponds to a critical carburisation depth, such that the coil wall material can not fulfil minimum required mechanical properties any more in order to withstand the loads during operation of the steam cracking furnace. If the carburisation depth reaches this threshold, the coil is replaced in step 234 by a new one.

The present invention therefore provides a possibility to evaluate carburisation of a cracking coil and to estimate the current depth of carburisation. The present invention thus allows to significantly improve operation and efficiency of the cracking furnace, to increase maintenance intervals and to reduce costs, e.g. by avoiding downtime due to repairs and maintenance, and by avoiding unnecessarily early replacements of coils although their maximum possible lifetime was not reached yet.

**Claims**

1. A method of determining a carburisation model of a coil (112, 300) of a steam cracking furnace (10),

   wherein a carbon gas is led through the coil (112, 300) during operation of the steam cracking furnace (10),
   wherein in a carburised portion of a wall of the coil (112, 300), especially an inner part of the wall facing the carbon gas, carburisation of a material of the wall occurs,
wherein a first relation characterises a depth (w) of the carburised portion in dependence of time and further in dependence of a growth parameter ($k_p$),
wherein a second relation characterises the growth parameter ($k_p$) in dependence of a temperature and further in dependence of at least one, especially two, material specific constant,
wherein the method comprises the steps of:

determining (211, 213), especially measuring, reference temperature values at reference positions (371, 372, 373, 374) of a wall of a reference coil during operation of a reference steam cracking furnace comprising the reference coil;
determining (214), especially measuring, reference carburised portion values of a depth of a carburised portion at the reference positions (371, 372, 373, 374) of the wall of the reference coil at a reference point in time;
determining (221) the at least one material specific constant in dependence of the first relation and the second relation and further in dependence of the reference temperature values and the reference carburised portion values; and
determining (222) the carburisation model of the coil in dependence of the determined at least one material specific constant and further in dependence of the first relation and the second relation, the carburisation model characterising the depth (w) of the carburised portion of the coil (112, 300) of the steam cracking furnace (10) at a specific position of the wall of the coil in dependence of time and in dependence of a temperature at the specific position of the wall of the coil.

2. The method according to claim 1, further comprising the step of:

determining a remaining lifetime of the coil (112, 300) in dependence of the carburisation model.

3. The method according to claim 1 or 2, further comprising the step of:

determining (232) a current depth of the carburised portion at the specific position in dependence of the carburisation model.

4. The method according to any one of the preceding claims, further comprising the step of:

determining (233) whether the current depth of the carburised portion reaches a predetermined threshold.

5. The method according to any one of the preceding claims, further comprising the step of:

controlling (230) operation of the steam cracking furnace (10) in dependence of the carburisation model.

6. The method according to any one of the preceding claims, further comprising the steps of:

dividing (212) the reference coil in a number of different sections (361, 362, 363, 364), particularly four sections, particularly top, bottom, bend, and sidewall; and
determining (212) for each section (361, 362, 363, 364) a position with the highest temperature in the wall during operation of the reference steam cracking furnace as the reference positions (371, 372, 373, 374) of the wall of the reference coil.

7. The method according to any one of the preceding claims, wherein determining the reference temperature values at the reference positions (371, 372, 373, 374) of the wall of the reference coil comprises the steps of:

determining (211), especially measuring, for each reference position (371, 372, 373, 374) a multitude of individual temperature values, particularly in predetermined time intervals or at predetermined points in time; and
determining (213) for each reference position (371, 372, 373, 374) a statistical value, especially a mean value, of the corresponding individual temperature values as the reference temperature value at the corresponding reference position (371, 372, 373, 374).

8. The method according to any one of the preceding claims, wherein determining the at least one material specific constant comprises the steps of:

determining (221) in dependence of the first relation, in dependence of the reference carburised portion values, and in dependence of the reference point in time for each of the reference positions a corresponding reference value for the growth parameter ($k_p$); and

determining (221) the at least one material specific constant ($k_0$, Q) in dependence of the second relation, in dependence of reference temperature values, and in dependence of the reference values for the growth parameter ($k_p$).

9.  The method according to any one of the preceding claims, wherein determining the carburisation model further comprises the steps of:

    determining (222) in dependence of the second relation, in dependence of the determined at least one material specific constant, and in dependence of the temperature at the specific position of the wall of the coil (112, 300) a specific value for the growth parameter ($k_p$); and

    determining (222) in dependence of the first relation, and in dependence of the specific value for the growth parameter ($k_p$) a relation for the depth (w) of the carburised portion in dependence of time.

10. The method according to any one of the preceding claims, wherein the first relation characterises the depth $w$ of the carburised portion in dependence of time $t$ as follows:

$$w^2 - w_0^2 = 2k_p t \,,$$

    wherein $w_0$ is an original depth of the carburised portion, especially at the beginning of the lifetime of the coil, and wherein $k_p$ is the growth parameter.

11. The method according to any one of the preceding claims, wherein the second relation characterises the growth parameter $k_p$ in dependence of the temperature $T$ as follows:

$$k_p = k_0 \exp\left(-\frac{Q}{RT}\right),$$

    wherein $k_0$ is a first material specific constant characterising a pre-exponential factor,

    wherein Q is a second material specific constant characterising an activation energy, and
    wherein R is the universal gas constant.

12. A computing unit comprising means for performing a method according to any one of the preceding claims.

13. A computer program that causes a computing unit to perform a method according to any one of claims 1 to 11 when executed on the computing unit.

14. A machine-readable storage medium having stored thereon a computer program according to claim 13.

**Fig. 1**

Fig. 2

Fig. 3

Fig. 4

EP 4 098 720 A1

EP 4 098 720 A1

Fig. 5

18

Fig. 6

Fig. 7

Fig. 8

Europäisches
Patentamt

European
Patent Office

Office européen
des brevets

# EUROPEAN SEARCH REPORT

Application Number

EP 21 02 0289

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/101586 A1 (ILIYAS ABDULJELIL [SA] ET AL) 13 April 2017 (2017-04-13)<br>* figures 1-15 *<br>* paragraph [0035] - paragraph [0100] *<br>----- | 1-14 | INV.<br>C10G9/36<br>C10G9/16<br>C10G75/00<br>G05D23/00 |
| X | WO 2021/014025 A1 (BASF SE [DE]) 28 January 2021 (2021-01-28)<br>* figures 1-6 *<br>* page 1, line 7 - page 25, line 2 *<br>* claims 1-15 *<br>----- | 1-14 | F27D19/00 |
| A | WU X. Q. ET AL: "Structure Degradation of 25Cr35Ni Heat-Resistant Tube Associated with Surface Coking and Internal Carburization",<br>JOURNAL OF MATERIALS ENGINEERING AND PERFORMANCE.,<br>vol. 7, no. 5, 1 October 1998 (1998-10-01), pages 667-672, XP055850620,<br>US<br>ISSN: 1059-9495, DOI: 10.1361/105994998770347549<br>* page 667 - page 672 *<br>* figures 1-7 *<br>----- | 1-14 | |

| | | | |
|---|---|---|---|
| | | | TECHNICAL FIELDS SEARCHED (IPC) |
| | | | C10G<br>G05D<br>F27D |

The present search report has been drawn up for all claims

| Place of search | Date of completion of the search | Examiner |
|---|---|---|
| The Hague | 12 October 2021 | Bernet, Olivier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 02 0289

This annex lists the patent family members relating to the patent documents cited in the above-mentioned European search report.
The members are as contained in the European Patent Office EDP file on
The European Patent Office is in no way liable for these particulars which are merely given for the purpose of information.

12-10-2021

| Patent document cited in search report | | Publication date | Patent family member(s) | | Publication date |
|---|---|---|---|---|---|
| US 2017101586 A1 | | 13-04-2017 | CN | 106574191 A | 19-04-2017 |
| | | | EP | 3149113 A1 | 05-04-2017 |
| | | | JP | 2017524041 A | 24-08-2017 |
| | | | US | 2017101586 A1 | 13-04-2017 |
| | | | WO | 2015181638 A1 | 03-12-2015 |
| WO 2021014025 A1 | | 28-01-2021 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Ethylene. Ullmann's Encyclopedia of Industrial Chemistry. 15 April 2009